# EUROPÄISCHE PATENTSCHRIFT

(11) **EP 0 710 542 B1**
(45) Veröffentlichungstag und Bekanntmachung des Hinweises auf die Patenterteilung: **29.12.1999**
(21) Anmeldenummer: 95116862.4
(22) Anmeldetag: 26.10.1995
(51) Int. Cl.: B30B 5/06, B29C 70/50

(54) **Vorrichtung zur Herstellung von faserverstärktem, thermoplastischem Material**
Apparatus for producing fiber reinforced thermoplastic material
Dispositif de fabrication d'un matériau thermoplastique renforcé de fibres

(30) Priorität: 07.11.1994 AT 205394
(43) Veröffentlichungstag der Anmeldung: 08.05.1996
(73) Patentinhaber: Borealis AG, 2323 Schwechat-Mannswörth (AT)
(72) Erfinder: Blauhut, Wilfried, Dipl.-Ing., A-4040 Linz (AT)
(74) Vertreter: Kunz, Ekkehard, Dr.

(56) Entgegenhaltungen:
- EP-A- 0 562 280
- DE-A- 4 235 382
- DE-A- 4 301 844

## Beschreibung

Die seitliche Abdichtung des Produktraumes von Doppelbandpressen ist ein seit langem bekanntes Problem. Es ist insbesondere dann schwierig zu beherrschen, wenn das Produkt im Produktraum ganz oder teilweise fließfähig ist. In diesem Fall wirkt der Preßdruck als Flüssigkeitsdruck allseitig, d.h. er wirkt auch in vollem Umfang auf die seitliche Abdichtung, bringt dort Querkräfte auf, die die Dichtung aus der Presse seitlich hinauszudrücken versuchen, und treibt das fließfähige Preßgut, solange es noch nicht erstarrt ist, in die Fugen zwischen Dichtung und Preßbänder.
Eine Möglichkeit zur Abdichtung besteht darin, das fließfähige Preßgut am Rand zur Erstarrung zu bringen, im Fall von Thermoplastschmelze heißt das Abkühlen, damit kein fließfähiges Preßgut mehr nach außen gedrückt werden kann. Dies wird beispielsweise gemäß DE-OS-42 35 382 dadurch erreicht, daß seitlich ein poröses Profil mitgeführt wird, das gegen Hinausgedrücktwerden seitlich abgestützt ist, und das beim Preßvorgang in seinen Hohlräumen Thermoplastschmelze aufnimmt, wobei die Schmelze erstarrt und zusammen mit dem Profil den Rand des Preßgutes bildet. Zur besseren Wärmeabfuhr ist es auch möglich, das Profil vor seinem Einlauf in die Presse zu befeuchten. Sobald nämlich die Thermoplastschmelze das poröse, befeuchtete Profil berührt, dringt die ankommende Schmelze in die Zwischenräume des Profils ein, gibt Wärme an das Profil und das Wasser ab, wobei das Wasser verdampft. Die eingedrungene Thermoplastschmelze bildet so mit dem nunmehr nicht mehr porösen Profil eine Einheit, welche die eigentliche Dichtung darstellt.
Ebenso ist es nach DE-OS-42 35 382 möglich, die Faserverstärkung selbst, bevor sie in die Presse einläuft, an den beiden seitlichen Rändern zu befeuchten, sodaß sie auch in diesem Fall schon am Presseneingang, eventuell schon beim Auftragen der Thermoplastschmelze auf die Faserverstärkung die Randzone des Preßgutes durch das Verdampfen des Wassers abkühlt, zu erstarren beginnt und am Rand die eigentliche Dichtung bildet. Es hat sich jedoch gezeigt, daß die Leistungsfähigkeit des befeuchteten Profils nicht immer ausreicht.

Ein anderer Weg wird gemäß EP-0 562 280 beschritten. Dort werden kühlbare Seitenabgrenzungskörper beschrieben, die die Wärme im Randbereich der Presse abführen, und so eine ausreichende Dichtung bewerkstelligen sollen. Abgesehen davon, daß die dort vorgeschlagene Konstruktion aus geschichteten Blechen, die mit Kanälen versehen sind, bei denen die Kanalwände mit Silber- oder Nickellot verlötet werden, sehr aufwendig ist, entweicht bei dieser Konstruktion durch die Spalten, welche zwischen den Seitenabgrenzungskörpern und den Preßbändern sind, immer eine gewisse Menge Harz. Hiebei genügen schon relativ kleine Mengen, um beim Betrieb einer Doppelbandpresse beträchtliche Schwierigkeiten zu verursachen. Diese Schwierigkeiten werden auch durch die vom gleichen Anmelder stammende Lehre von DE-OS-43 01 844, welche eine noch aufwendigere Konstruktion bedingt, nicht beseitigt.

Unerwarteterweise wurde nun eine Vorrichtung gefunden, bei der die Wärmeabfuhr auf sehr einfache Weise dadurch erfolgt, daß einem seitlich mitgeführten porösen Profil, gezielt in der Preßzone solange Wasser zugeführt wird, bis sich ein fester Rand gebildet hat.

Gegenstand der Erfindung ist eine heiz- und kühlbare Doppelbandpresse mit zwei umlaufenden endlosen Stahlbändern zur Herstellung von faserverstärkten Thermoplasten mit seitlicher Abdichtung des Preßraumes mittels eines mitgeführten, abgestützten, porösen Profils, die dadurch gekennzeichnet ist, daß seitlich zwischen den Preßbändern Wassereinspritzvorrichtungen angebracht sind, mit deren Hilfe dem porösen Profil gezielt Wasser zugeführt wird, das verdampft und dabei Wärme abführt.

Thermoplastische Materialien sind beispielsweise thermoplastische Polyester, Polyamide, Polyvinylchlorid, Polyethylen, Polypropylen oder dessen Copolymere. Bevorzugt werden Polypropylen oder Copolymere davon eingesetzt.
Als Verstärkungsfaser werden beispielsweise Glasfasern, Kohlefasern, Aramidfasern in Form von Endlosfasermatten, Schnittfasermatten, Gewirken, Geweben oder Fadengelegen eingesetzt. Bevorzugt werden Schnittfasermatten aus Glasfaser eingesetzt.
Das poröse Profil ist beispielsweise ein Streifen aus Filz, Vlies oder Schaum, eine Rundschnur, ein Seil oder eine Flechtschnur. Bevorzugt ist es eine Rundschnur. Es kann artfremd oder artgleich mit dem für die Matrix verwendeten Thermoplasten sein. Bevorzugt ist es artgleich mit dem verwendeten Thermoplasten.

Zur Herstellung der faserverstärkten Thermoplasten wird dem seitlich mitgeführten porösen Profil die zur Verdampfungskühlung der andrängenden Thermoplastschmelze erforderliche Wassermenge am Rande der von den Trums gebildeten Preßzone gezielt zugeführt. Die Zuführung erfolgt bevorzugt am Anfang derjenigen Zonen, in denen ein besonders großer Andrang von noch flüssigem Preßgut auf das poröse Profil erfolgt. Dies ist insbesondere der Bereich von Drucksteigerungen.

Es ist wichtig, genau jene Wassermenge an das poröse Profil heranzuführen, die durch ihr Erwärmen und Verdampfen genau jene Wärmemenge abführt, die zur Ausbildung einer erstarrten Randdichtung nötig ist.

Die Wasserzufuhr kann mittels einer einzigen Zufuhr erfolgen, sie kann auch in mehreren Teilströmen erfolgen. Bevorzugt erfolgt sie in mehreren Teilströmen. Die zuzuführende Wassermenge hängt ab von der Art des verwendeten Thermoplasten, des porösen Profils, von Preßdruck, Preßtemperatur, Bandgeschwindigkeit, Schichtdicke der Thermoplasten und dergleichen, sie ist jedoch auf sehr einfache Weise jeweils experimentell festzusetzen, da einfach nur soviel Wasser zuzuführen ist, daß gerade ein fester, selbst dichtender, nicht mehr herausquellender Rand gebildet wird.
Das Wasser kann gegebenenfalls zur Verminderung der Oberflächenspannung grenzflächenaktive Stoffe enthalten, z.B. Tenside, wie sie in handelsüblichen Spülmitteln enthalten sind.

Die Zufuhr erfolgt bevorzugt in mehreren Teilströmen. Bevorzugt erfolgt sie über Kanäle in feststehenden Elementen, etwa über die zur Stützung der seitlichen Abdichtung vorhandenen Dichtungsstützen. Dabei sind die Dichtungsstützen im einfachsten Fall mit Bohrungen versehen, aus denen Wasser heraustreten kann. Eine andere Ausgestaltung besteht darin, daß in Ausnehmungen der Dichtungsstützen Röhrchen angebracht sind, die die Kühlflüssigkeit möglichst nahe an das poröse Profil heranbringen.
Die Wassereinspritzvorrichtungen sind bevorzugt in jenen Bereichen angeordnet, in denen das Preßgut von einem Pressenbereich niedrigeren Druckes in einen Pressenbereich höheren Druckes gelangt.

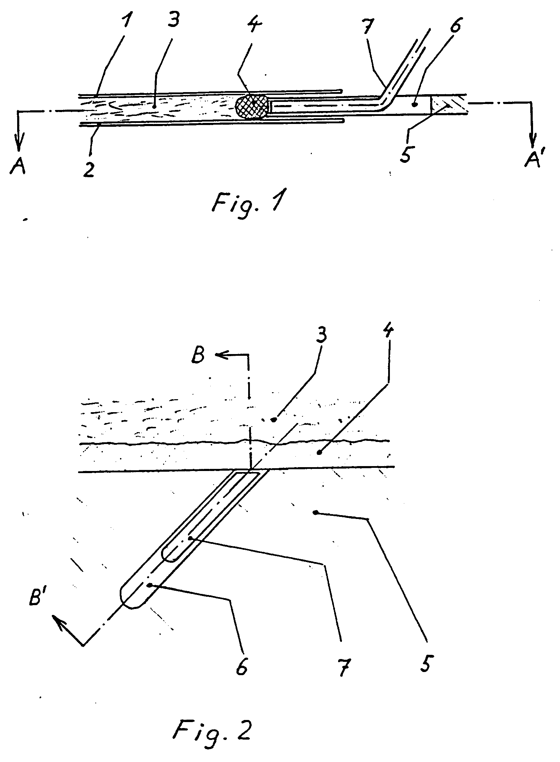

Fig. 1 und 2 sind Detailzeichnungen einer bevorzugten Ausführungsform der Flüssigkeitszufuhr zum porösen Profil der Doppelbandpresse.
Fig. 1 stellt dabei einen Schnitt entlang der Schnittlinie B - B' der Fig. 2 dar, das ist ein abgewinkelter Schnitt senkrecht zu den Ebenen der Preßbänder und im linken Teil der Fig. 1 auch senkrecht zur Bewegungsrichtung der Preßbänder in der Doppelbandpresse.
Fig. 2 stellt einen Schnitt entlang der Schnittlinie A - A' der Fig. 1 dar, das ist ein Schnitt in der Ebene in der Mitte zwischen den Preßbändern.

In den Figuren bedeuten: (1) das obere Preßband, (2) das untere Preßband, (3) das Preßgut, (4) das poröse Profil, (5) die Stützen für (4), (6) eine aus (5) herausgefräste Ausnehmung und (7) ein in (6) eingelötetes Röhrchen zur Zuführung von Wasser an (4).

## Patentansprüche

1. Heiz- und kühlbare Doppelbandpresse mit zwei umlaufenden endlosen Stahlbändern zur Herstellung von faserverstärkten Thermoplasten mit seitlicher Abdichtung des Preßraumes mittels eines mitgeführten, abgestützten, porösen Profils, dadurch gekennzeichnet, daß seitlich zwischen den Preßbändern Wassereinspritzvorrichtungen angebracht sind, mit deren Hilfe dem porösen Profil gezielt Wasser zugeführt wird, das verdampft und dabei Wärme abführt.

2. Heiz- und kühlbare Doppelbandpresse nach Anspruch 1, dadurch gekennzeichnet, daß die Wassereinspritzvorrichtungen am Übergang von Bereichen niedrigen Preßdruckes zu Bereichen höheren Preßdruckes angeordnet sind.

## Claims

1. Heatable and coolable twin-belt press having two circulating continuous steel belts for the production of fibre-reinforced thermoplastics with lateral sealing of the pressing space by means of a supported, porous profile, characterized in that water injection devices are attached laterally between the pressing belts, with the aid of which the water is supplied to the porous profile in a controlled manner, and evaporates and thereby removes heat.

2. Heatable and coolable twin-belt press according to Claim 1, characterized in that the water injection devices are located at the transition from regions of low pressing pressure to regions of higher pressing pressure.

## Revendications

1. Presse à double bande pouvant être chauffée et refroidie, comprenant deux bandes d'acier sans fin tournantes, pour la fabrication de matières thermoplastiques renforcées par des fibres avec une étanchéification latérale de l'espace de compression au moyen d'un profilé poreux supporté et entraîné, qui est caractérisée en ce que des dispositifs d'injection d'eau sont disposés latéralement entre les bandes de la presse, à l'aide desquels de l'eau est amenée de façon appropriée au profilé poreux, qui s'évapore et évacue ainsi la chaleur.

2. Presse à double bande pouvant être chauffée et refroidie selon la revendication 1, caractérisée en ce que les dispositifs d'injection d'eau sont situés à la transition des zones de faible force de compression et des zones où la force de compression est plus élevée.
